# EUROPÄISCHE PATENTANMELDUNG

(11) **EP 1 201 344 A1**
(43) Veröffentlichungstag der Anmeldung: **02.05.2002**
(21) Anmeldenummer: 01122406.0
(22) Anmeldetag: 20.09.2001
(51) Int. Cl.: B23K 3/02

(54) **Brennkammer-Lötkolben**

(30) Priorität: 25.10.2000 DE 10052738
(71) Anmelder: Rothenberger Werkzeuge Aktiengesellschaft, 65779 Kelkheim / Ts. (DE)
(72) Erfinder: Waltersdorf, Manfred, 61462 Königstein (DE)
(74) Vertreter: Zapfe, Hans, Dipl.-Ing.

(57) **Zusammenfassung**

Ein Brennkammer-Lötkolben mit einer Brennkammer (1), die einen Boden (2) und eine Decke (3) aufweist, besitzt einen Lötkörper (6), der aus einem Arbeitsabschnitt (7) und einem Halteabschnitt (8) besteht, wobei der Arbeitsabschnitt (7) von der Brennkammer (1) absteht und der Halteabschnitt (8) durch eine öffnung (10) im Boden (2) in die Brennkammer (1) ragt. Eine Brennerlanze (12) mit einer Flammenöffnung (27) ist innerhalb der Brennkammer (1) auf den Halteabschnitt (8) ausgerichtet. Ferner ist im Bereich der Decke (3) mindestens eine Austrittsöffnung (23) für die Flammenabgase angeordnet. Um den spezifischen Gasverbrauch, die Aufheizzeiten und die Wärmebelastung der Bedienungsperson und der Umgebung zu verringern und den thermischen Wirkungsgrad zu erhöhen, ist über der Austrittsöffnung (23) und vor dem Halteabschnitt (8) eine Gas-Leiteinrichtung (24) mit einem Spalt (25) für den Austritt der Flammenabgase angeordnet, wobei der Spalt (25) die Decke (3) überragt und durch diesen Spalt (25) die austretenden Abgase über die stromabwärts des Spaltes (25) liegende Decke (3) der Brennkammer (1) leitbar sind.

## Beschreibung

Die Erfindung betrifft einen Brennkammer-Lötkolben mit einer Brennkammer, die einen Boden und eine Decke aufweist, mit einem Lötkörper, der einen Arbeitsabschnitt und einen Halteabschnitt besitzt, wobei der Arbeitsabschnitt von der Brennkammer absteht und der Halteabschnitt durch eine öffnung im Boden in die Brennkammer ragt, und mit einer Brennerlanze mit einer Flammenöffnung, die innerhalb der Brennkammer auf den Halteabschnitt ausgerichtet ist, wobei ferner im Bereich der Decke mindestens eine Austrittsöffnung für die Flammenabgase angeordnet ist.

Bei derartigen Brennkammer-Lötkolben wird die zur Beheizung des am Ende etwa keilförmigen, aus Kupfer bestehenden Lötkörpers benötigte Wärme durch Verbrennung eines Brenngas-Luftgemischs in der Brennkammer erzeugt. Ein Teil der Wärme der Brenngase wird unmittelbar auf den Haltezapfen des Lötkörpers übertragen, ein weiterer Teil auf die Wände der Brennkammer, von denen sie wiederum teilweise durch Wärmeleitung auf den Lötkörper übertragen wird. Ein sehr großer Teil der Enthalpie der Abgase geht jedoch durch deren Austritt an die Atmosphäre verloren. Ein weiterer Teil der Wärme geht durch Abstrahlung von den Wänden der Brennkammer und der Oberfläche des Arbeitsabschnitts des Lötkörpers verloren, so daß nur ein Bruchteil der Verbrennungswärme für den eigentlichen Lötvorgang zur Verfügung steht, der üblicherweise nur intermittierend bzw. mit Unterbrechungen und Pausen ausgeführt wird. Besonders groß sind die Wärmeverluste in der Aufheizphase, in der Flammen mit einer Länge von 15 cm und mehr aus der Brennkammer austreten. Daher haben solche Brennkammer-Lötkolben einen hohen Gasverbrauch und einen ungünstigen Wirkungsgrad.

Durch die FR 2 374 124 A ist ein Brennkammer-Lötkolben der eingangs beschriebenen Gattung bekannt, bei dem die oberhalb des Haltezapfens angeordnete Decke der Brennkammer durch eine schlitzförmige Abgasöffnung unterbrochen ist, durch die die Abgase im wesentlichen in Normalenrichtung zur Decke der Brennkammer austreten. Damit geht die in den Abgasen noch enthaltene Enthalpie sofort nach dem Austritt aus der Brennkammer für die weitere Beheizung verloren. Hinzu kommt, daß der austretende heiße Abgasstrahl eine Injektorwirkung erzeugt und kalte Umgebungsluft ansaugt, die von unten über die heißen Außenflächen der Brennkammer strömt und damit eine unerwünschte Kühlwirkung mit hohen Wärmeverlusten erzeugt. Hinzu kommt weiterhin, daß die heiße Abgasströmung nach oben und seitlich austritt, und zwar in Richtungen, aus denen die Bedienungsperson den Lötvorgang überwachen und kontrollieren und Lötmaterial zuführen muß.

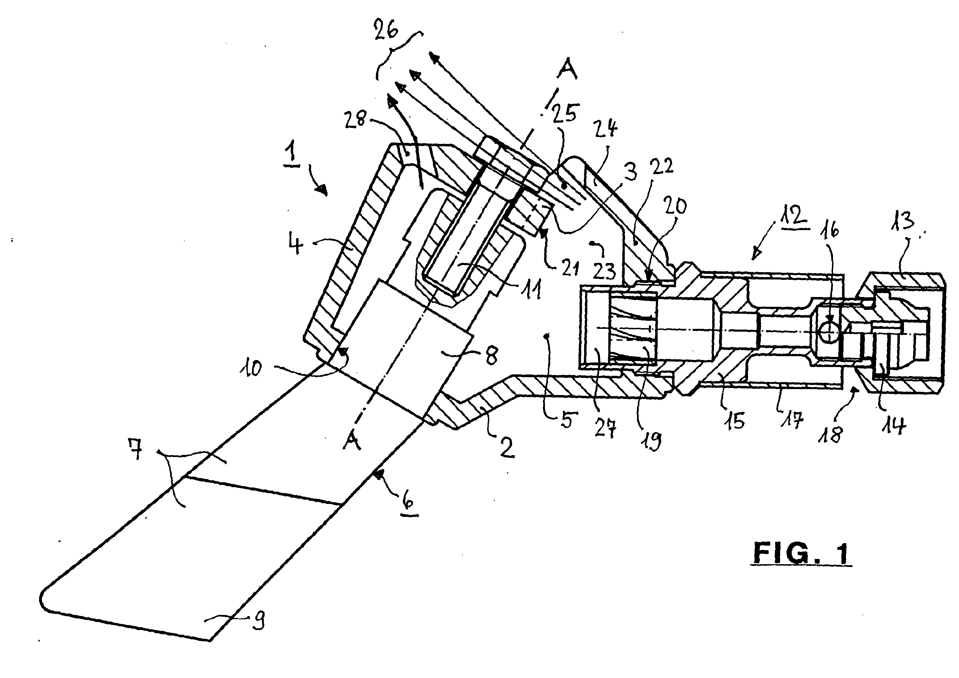

In der EP 0 208 583 A1 sind zwei gattungsgemäße Lötkolben mit Brennkammern beschrieben, die in der Brennkammer-Decke zwei bzw. eine öffnung besitzen, aus denen bzw. der Brenngasstrahlen bzw. Flammen austreten, die im wesentlichen senkrecht von der Brennkammer--Decke weg gerichtet sind. Bei dem Gegenstand der Figur 1, die den damaligen Stand der Technik zeigt, umspülen die Brenngase lediglich den brennerseitigen oberen Teil des Lötzapfens halbseitig (der inneren Verlängerung des Arbeitsteils des Löstkolbens). Die angesaugten Kaltluftströme kühlen auch und insbesondere die Decke der Brennkammer. Damit sind ein ungünstiger Wärmeübergang, eine schlechte Ausnutzung der Flammenenergie und ein hoher Gasverbrauch verbunden. Die Flammen können den außen und unten liegenden Kopf der radial wirkenden Klemmschraube nicht erreichen. Die sehr heißen Brenngase sind nach rückwärts und in eine Richtung gelenkt, aus der die Bedienungsperson den Lötvorgang beobachten und steuern muß.

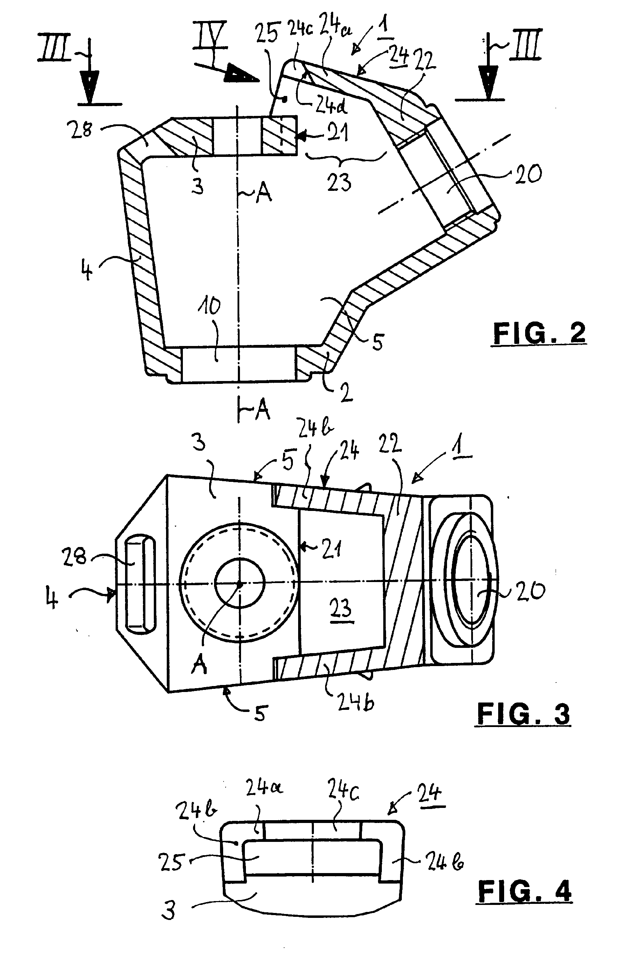

Bei dem Gegenstand von Figur 2 liegt eine einzige Brenngasöffnung jenseits des Lötzapfens, vom Brenner aus gesehen. Diese öffnung ist düsenförmig verjüngt, wodurch der Gasstrahl beschleunigt wird und eine größere Reichweite erhält, was die Bedienungsperson noch mehr belastet. Zur Figur 2 ist angegeben, daß die Brenngase den gesamten Lötzapfen umspülen und daß dadurch ein besserer Wärmeübergang, eine bessere Ausnutzung der Flammenenergie und ein geringerer Gasverbrauch verbunden sind. Aber auch hierbei kühlt der von rückwärts angesaugte Kaltluftstrom auch und insbesondere die Decke der Brennkammer und den Kopf der Zugschraube. Dadurch zieht insbesonder der Schraubenkopf Wärme aus dem Lötzapfen ab.

Bei beiden bekannten Ausführungen werden die Brennkammerwände einschließlich der Decke nur auf ihren Innenseiten von den Brenngasen bzw. Flammen überstrichen. Dadurch endet jeder Wärmeübergang von den Brenngasen auf die Brennkammer und auf den Lötzapfen, sobald die Brenngase die öffnung verlassen haben. Es ist zur Figur 2 auch ausdrücklich angegeben, daß der Schraubenkopf der Zugschraube gegen die Flamme bzw. die Brenngase geschützt ist.

Jede heiße Oberfläche, die ungeschützt und unbeheizt der Umgebung ausgesetzt ist, und dies gilt für alle Außenflächen der Brennkammern (einschließlich der Brennkammerdecken) ebenso wie für den Schraubenkopf, bildet durch die unvermeidbare Abstrahlung an die Umgebung und wegen der konvektiven Kaltluftströme eine Wärmesenke, die nicht nur einen erheblichen Energieverlust und einen größeren Gasverbrauch zur Folge hat, sondern auch die Aufheizzeiten verlängert.

Der Erfindung liegt daher die Aufgabe zugrunde, einen Brennkammer-Lötkolben der eingangs beschriebenen Gattung dahingehend zu verbessern, daß der Gasverbrauch verringert, der thermische Wirkungsgrad erhöht, die Aufheizzeit von Raum- auf Betriebstemperatur verkürzt und die Wärmebelastung der Bedienungsperson und der Umgebung verringert wird.

Die Lösung der gestellten Aufgabe erfolgt dabei erfindungsgemäß dadurch, daß über der Austrittsöffnung und vor dem Halteabschnitt eine Gas-Leiteinrichtung mit einem Spalt für den Austritt der Flammenabgase angeordnet ist, wobei der Spalt die Decke überragt, und daß durch diesen Spalt die austretenden Abgase über die stromabwärts des Spaltes liegende Decke der Brennkammer leitbar sind.

Durch diese Gestaltung der Brennkammer wird die gestellte Aufgabe in vollem Umfange gelöst, insbesondere wird ein Brennkammer-Lötkolben der eingangs beschriebenen Gattung dahingehend verbessert, daß der Gasverbrauch verringert, der thermische Wirkungsgrad erhöht, die Aufheizzeit von Raum- auf Betriebstemperatur verkürzt und die Wärmebelastung der Bedienungsperson und der Umgebung verringert wird. Weitere Vorteile werden in der Detailbeschreibung näher erläutert.

Es ist dabei im Zuge weiterer Ausgestaltungen der Erfindung besonders vorteilhaft, wenn - entweder einzeln oder in Kombination - :
* die Gas-Leiteinrichtung die Decke der Brennkammer stufenartig überragt und eine eigene Decke und Seitenwände aufweist, die in die Seitenwände der Brennkammer übergehen,
* die Decke der Gasleiteinrichtung unter einem Winkel von 0 bis 30 Grad zu der stromabwärts liegenden Decke der Brennkammer verläuft,
* die Decke der Gas-Leiteinrichtung in Richtung der Abgasströmung gegenüber der stromabwärts liegenden Decke der Brennkammer divergiert,
* die Decke der Gasleiteinrichtung unter einem Winkel von 10 bis 20 Grad zu der stromabwärts liegenden Decke der Brennkammer verläuft,
* der Halteabschnitt des Lötkörpers durch eine Zugschraube gegen die stromabwärts des Spaltes liegende Decke der Brennkammer verspannt ist und wenn der Spalt auf den Kopf der Schraube ausgerichtet ist,
* die Decke der Brennkammer stromaufwärts des Halteabschnitts eine Stirnkante besitzt, die die Austrittsöffnung begrenzt und sich über die gesamte innere Breite der Brennkammer erstreckt,
* die Decke der Gas-Leiteinrichtung eine den Spalt begrenzende Kante aufweist, die eine bogenförmige Ausnehmung für den Kopf der Schraube besitzt,
* in dem stromabwärts des Spaltes und jenseits des Halteabschnitts des Lötkörpers liegenden Teil der Decke der Brennkammer eine zusätzliche öffnung angeordnet ist,
* die zusätzliche öffnung einen Querschnitt aufweist, der zwischen dem 0,2- bis 0,7-Fachen des Querschnitts des Spaltes beträgt und/oder, wenn
* die zusätzliche öffnung einen länglichen Querschnitt aufweist.

Ein Ausführungsbeispiel des Erfindungsgegenstandes wird nachfolgend anhand der Figuren 1 bis 6 näher erläutert.

Es zeigen:
- Figur 1: einen teilweisen Vertikalschnitt durch die Brennkammer mit dem Lötkörper und der Brennerlanze,
- Figur 2: einen Vertikalschnitt durch die Brennkammer,
- Figur 3: einen Schnitt entlang der Linie III-III durch die Brennkammer nach Figur 2,
- Figur 4: eine seitliche Draufsicht auf den oberen Teil der Brennkammer in Richtung des Pfeils IV in Figur 2,
- Figur 5: eine Seitensicht der Brennkammer nach Figur 2 in einer relativen Lage nach Figur 1 und
- Figur 6: eine Draufsicht auf die Brennkammer nach Figur 5 in Richtung des Pfeils Vl in Figur 5.

In Figur 1 ist eine Brennkammer 1 dargestellt, die einen Boden 2, eine Decke 3, eine Stirnwand 4 und Seitenwände 5 besitzt, von denen hier nur die hintere sichtbar ist. In die Brennkammer 1 ist ein Lötkörper 6 aus Kupfer eingesetzt, der aus einem Arbeitsabschnitt 7 und einem Halteabschnitt 8 mit einer Achse A-A besteht. Das untere Ende 9 des Arbeitsabschnitts 7 ist keilförmig ausgebildet, und der Halteabschnitt 8 ist mittels eines Zylinderabschnitts durch eine öffnung 10 in die Brennkammer 1 eingeführt. Das obere Ende des Halteabschnitts 8 ist durch eine Zugschraube 11 in Richtung auf die Decke 3 verspannt.

Von der Seite her mündet in die Brennkammer 1 eine Brennerlanze 12, die über eine überwurfmutter 13 mit einem nicht gezeigten Handgriff verschraubt ist, zu dem auch ein gleichfalls nicht gezeigtes Regelventil für das Brenngas gehört. Zur Brennerlanze 12 gehört ferner ein Düsenkörper 14, der in ein mehrfach abgestuftes Brennerohr 15 eingeschraubt ist. Am Anfang dieses Brennerrohrs 15 befinden sich - diametral gegenüberliegend - zwei Bohrungen 16 für die Zufuhr von Verbrennungsluft. Auf das Brennerrohr ist eine Hülse 17 aufgeschoben, die rückwärts bis über die Bohrungen 16 reicht und gegenüber der überwurfmutter 13 einen Ringspalt 18 frei läßt, der zur Vergleichmäßigung der Luftzufuhr dient. In der Nähe des jenseitigen Endes des Brennerrohrs 15 ist in dieses ein Drallkörper 19 eingesetzt, der zur Verwirbelung und Mischung von Brenngas und Luft dient. Die Brennerlanze 12 ist mittels einer Gewindebohrung 20 in die Brennkammer 1 eingeschraubt, und zwar in einer solchen Richtung, daß eine Flammenöffnung 27 auf den Halteabschnitt 8 ausgerichtet ist. Durch den Strömungsimpuls der Brennerflamme wird der Halteabschnitt 8 kräftig von der Brennerflamme umströmt, und ein Teil der Wärmeenergie wird auch an die Wände der Brennkammer abgegeben und von diesen mittels des Bodens 2 an den Lötkörper 6 übertragen.

In der Aufheizphase und in den Arbeitspausen ist der Brennkammer-Lötkolben in etwa in dieser Lage mittels eines nicht gezeigten Aufstellbügels aufgestellt. Bis zu diesen Details ist die Vorrichtung Stand der Technik, so daß sich weitere Ausführungen erübrigen.

Erfindungsgemäß endet jedoch die Decke 3 in einer Stirnkante 21, die senkrecht zur Zeichenebene über die gesamte innere Breite der Brennkammer 1 verläuft und - in Strömungsrichtung und mit Blick in Richtung der Achse A-A des Halteabschnitts gesehen - vor dem Haltezapfen 8 liegt. Zwischen dieser Stirnkante 21 und einer Wand 22, in der sich die Gewindebohrung 20 befindet, wird dadurch eine Austrittsöffnung 23 für die Flamme bzw. Flammengase gebildet. über dieser Austrittsöffnung befindet sich eine hauben- oder taschenförmige förmige Gas-Leiteinrichtung 24, die in den Figuren 3 und 4 noch näher dargestellt ist. Dadurch wird vor der Decke 3 eine Stufe gebildet, und die Austrittsöffnung 23 geht in einen Spalt 25 über, aus dem die Flamme bzw. Flammengase in etwa in Richtung der Pfeile 26 austritt bzw. austreten.

Damit ist folgende Wirkung verbunden: Die Flammengase überstreichen nicht nur die Decke 3, sondern umspülen auch den Kopf der Schraube 11 in etwa parallel zur Oberseite der Decke 3. Dadurch wird ein Teil der Abwärme von außen an die Decke 3 und die Schraube 11 abgegeben und von hieraus an den Halteabschnitt 8 und von diesem an den Arbeitsabschnitt 9 abgegeben, der bei Lötarbeiten ständig Wärme "verbraucht". Weiterhin wird dadurch die Wärmeabstrahlung von der Decke 3 und dem Kopf der Schraube 11 an die Umgebung verringert bzw. unterdrückt. Da die Flammengase jetzt nicht mehr - wie beim Stande der Technik - etwa parallel zur Achse A-A abströmen, wird durch die Injektorwirkung dieser Gase nicht mehr Umgebungsluft mit kühlender Wirkung von unten über die Seitenwände 5 angesaugt, sondern zumindest überwiegend seitlich aus einer Richtung, oberhalb der Brennerlanze und des nicht gezeigten Handgriffs.

Die durch Luftumwälzung angeströmte äußere Oberfläche der Brennkammer 1 ist also wesentlich kleiner. Dadurch wird der Wärmewirkungsgrad zusätzlich gesteigert. Es wurde festgestellt, daß sich dadurch der Verbrauch an teurem Brenngas um 10 bis 25 % verringern läßt, wobei die relative Ersparnis davon abhängt, ob sich der Lötkolben in der Aufheizphase, in der Arbeitsphase oder im Pausenzustand zwischen Lötvorgängen befindet.

Eine zusätzliche Öffnung 28 in der Decke 3 ist im Querschnitt wesentlich kleiner als der Querschnitt des Spaltes 25, wie ein Vergleich mit den Figuren 2 bis 4 zeigt. Aus der Öffnung 28 tritt also nur ein Bruchteil der Abgase aus. Sie dient erstens als Zündhilfe beim Starten des Lötkolbens und ferner zum zusätzlichen Druckabbau in der Brennkammer 1, so daß die Brennerlanze 12 nicht gegen einen hohen Staudruck in der Brennkammer 1 arbeiten muß. Ferner wird dadurch auch die Austrittsgeschwindigkeit der Abgase aus dem Spalt 25 verringert und damit die Reichweite der heißen Abgase bzw. der Flamme, und diese Gase strömen laminar über die Außenseite der Decke 3 und über den Kopf der Zugschraube 11.

Ohne diese zusätzliche Öffnung 28, wären ein höherer Gasdruck und damit auch ein höherer Gasverbrauch notwendig, um den Lötkolben in Betrieb zu halten. Somit sorgt die Öffnung 28 für eine weitere Reduzierung des Gasverbrauchs und damit für einen höheren thermischen Wirkungsgrad.

Aus den Figuren 3, 4 und 6 geht noch folgendes hervor: Die Gas-Leiteinrichtung 24 besitzt eine Decke 24a und zwei Seitenwände 24b, die im Bereich des Spaltes 25 ein nach unten offenes "U" bilden. Im Bereich des Kopfes der Schraube 11 besitzt die Decke 24a eine kreisbogenförmige Ausnehmung 24c für ein Werkzeug, mit dem die Zugschraube 11 betätigt werden kann. Die bogenförmige Kante der Ausnehmung 24c besitzt eine Abschrägung 24d, wie dies in Figur 2, oben, dargestellt ist, um den Strömungsaustritt zu erleichtern

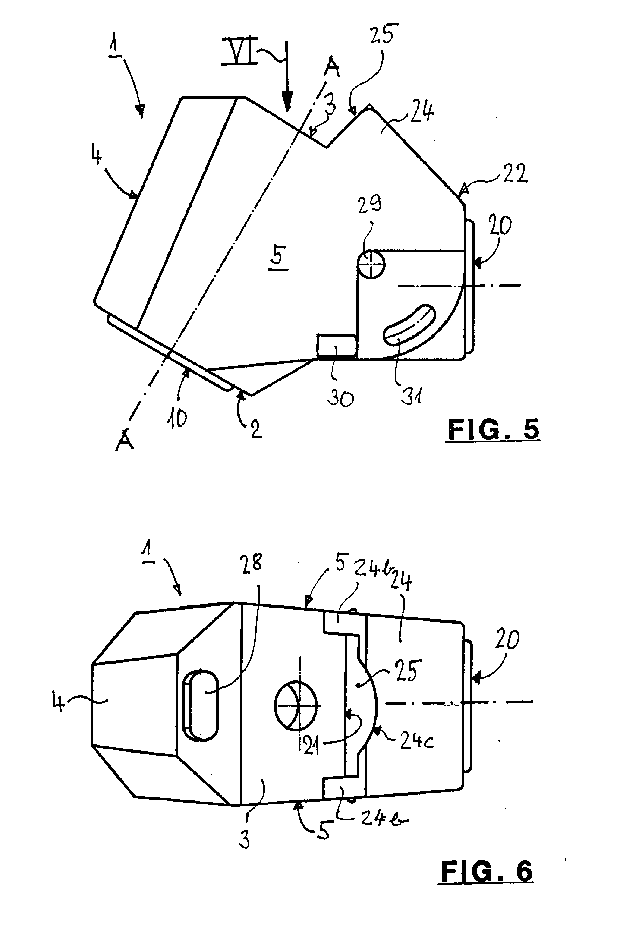

Figur 5 zeigt - nur auf einer Seite sichtbar - ein Sackloch 29 für eines der abgewinkelten Enden eines nicht gezeigten Aufstellbügels, der in der Abstellposition gegen je einen Anschlag 30 verschwenkbar ist. In der Arbeitsphase kann dieser Aufstellbügel über einen Rastvorsprung 31 hinweg gegen den nicht gezeigten Handgriff eingeschwenkt werden.

Wie sich aus den Figuren 1 bis 4 ergibt, bilden die Austrittsöffnung 23 und der Spalt 25 gewissermaßen eine Winkeldüse von im wesentlichen gleicher Breite, durch die die Strömung der Abgase beschleunigt und stabilisiert wird.

### Bezugszeichenliste:

- 1: Brennkammer
- 2: Boden
- 3: Decke
- 4: Stirnwand
- 5: Seitenwände
- 6: Lötkörper
- 7: Arbeitsabschnitt
- 8: Halteabschnitt
- 9: Ende
- 10: öffnung
- 11: Zugschraube
- 12: Brennerlanze
- 13: überwurfmutter
- 14: Düsenkörper
- 15: Brennerrohr
- 16: Bohrungen
- 17: Hülse
- 18: Ringspalt
- 19: Drallkörper
- 20: Gewindebohrung
- 21: Stirnkante
- 22: Wand
- 23: Austrittsöffnung
- 24: Gas-Leiteinrichtung
- 24a: Decke
- 24b: Seitenwände
- 24c: Ausnehmung
- 24d: Abschrägung
- 25: Spalt
- 26: Pfeile
- 27: Flammenöffnung
- 28: öffnung
- 29: Sackloch
- 30: Anschlag
- 31: Rastvorsprung

- A-A: Achse

## Patentansprüche

1. Brennkammer-Lötkolben mit einer Brennkammer (1), die einen Boden (2) und eine Decke (3) aufweist, mit einem Lötkörper (6), der einen Arbeitsabschnitt (7) und einen Halteabschnitt (8) besitzt, wobei der Arbeitsabschnitt (7) von der Brennkammer (1) absteht und der Halteabschnitt (8) durch eine öffnung (10) im Boden (2) in die Brennkammer (1) ragt, und mit einer Brennerlanze (12) mit einer Flammenöffnung (27), die innerhalb der Brennkammer (1) auf den Halteabschnitt (8) ausgerichtet ist, wobei ferner im Bereich der Decke (3) mindestens eine Austrittsöffnung (23) für die Flammenabgase angeordnet ist, **dadurch gekennzeichnet, daß** über der Austrittsöffnung (23) und vor dem Halteabschnitt (8) eine Gas-Leiteinrichtung (24) mit einem Spalt (25) für den Austritt der Flammenabgase angeordnet ist, wobei der Spalt (25) die Decke (3) überragt, und daß durch diesen Spalt (25) die austretenden Abgase über die stromabwärts des Spaltes (25) liegende Decke (3) der Brennkammer (1) leitbar sind.

2. Brennkammer-Lötkolben nach Anspruch 1, **dadurch gekennzeichnet, daß** die Gas-Leiteinrichtung (24) die Decke (3) der Brennkammer (1) stufenartig überragt und eine eigene Decke (24a) und Seitenwände (24b) aufweist, die in die Seitenwände (5) der Brennkammer (1) übergehen.

3. Brennkammer-Lötkolben nach Anspruch 2, **dadurch gekennzeichnet, daß** die Decke (24a) der Gasleiteinrichtung (24) unter einem Winkel von 0 bis 30 Grad zu der stromabwärts liegenden Decke (3) der Brennkammer (1) verläuft.

4. Brennkammer-Lötkolben nach Anspruch 3, **dadurch gekennzeichnet, daß** die Decke (24a) der Gas-Leiteinrichtung (24) in Richtung der Abgasströmung gegenüber der stromabwärts liegenden Decke (3) der Brennkammer (1) divergiert.

5. Brennkammer-Lötkolben nach Anspruch 4, **dadurch gekennzeichnet, daß** die Decke (24a) der Gasleiteinrichtung (24) unter einem Winkel von 10 bis 20 Grad zu der stromabwärts liegenden Decke (3) der Brennkammer (1) verläuft.

6. Brennkammer-Lötkolben nach Anspruch 1, **dadurch gekennzeichnet, daß** der Halteabschnitt (8) des Lötkörpers (6) durch eine Zugschraube (11) gegen die stromabwärts des Spaltes (25) liegende Decke (3) verspannt ist und daß der Spalt (25) auf den Kopf der Schraube (11) ausgerichtet ist.

7. Brennkammer-Lötkolben nach Anspruch 3, **dadurch gekennzeichnet, daß** die Decke (3) der Brennkammer (1) stromaufwärts des Halteabschnitts (8) eine Stirnkante (21) besitzt, die die Austrittsöffnung (23) begrenzt und sich über die gesamte innere Breite der Brennkammer (1) erstreckt.

8. Brennkammer-Lötkolben nach Anspruch 3, **dadurch gekennzeichnet, daß** die Decke (24a) der Gas-Leiteinrichtung (24) eine den Spalt (25) begrenzende Kante aufweist, die eine bogenförmige Ausnehmung (24c) für den Kopf der Schraube (1) besitzt.

9. Brennkammer-Lötkolben nach Anspruch 1, **dadurch gekennzeichnet, daß** in dem stromabwärts des Spaltes (25) und jenseits des Halteabschnitts (8) des Lötkörpers (6) liegenden Teil der Decke (3) der Brennkammer (1) eine zusätzliche öffnung (28) angeordnet ist.

10. Brennkammer-Lötkolben nach Anspruch 9, **dadurch gekennzeichnet, daß** die zusätzliche öffnung einen Querschnitt aufweist, der zwischen dem 0,2- bis 0,7-Fachen des Querschnitts des Spaltes (25) beträgt.

11. Brennkammer-Lötkolben nach Anspruch 9, **dadurch gekennzeichnet, daß** die zusätzliche öffnung (28) einen länglichen Querschnitt aufweist.
